# EUROPEAN PATENT SPECIFICATION

(11) **EP 3 159 488 B1**
(45) Date of publication and mention of the grant of the patent: **05.06.2019**
(21) Application number: 16194171.1
(22) Date of filing: 17.10.2016
(51) Int. Cl.: F01D 11/00, F01D 11/02, F16J 15/447, F16J 15/40

(54) **SEALING ASSEMBLY AND CORRESPONDING TURBINE**
DICHTUNGSANORDNUNG UND ZUGEHÖRIGE TURBINE
ENSEMBLE D'ÉTANCHÉITÉ ET TURBINE ASSOCIÉE

(30) Priority: 23.10.2015 KR 20150148308
(43) Date of publication of application: 26.04.2017
(73) Proprietor: Doosan Heavy Industries & Construction Co., Ltd., Seongsan-gu Changwon-si, Gyeongsangnam-do 51711 (KR)
(72) Inventor: KIM, Kyung Kook, 34071 Daejeon (KR)
(74) Representative: Ter Meer Steinmeister & Partner

(56) References cited:
- DE-A1- 2 931 714
- US-A1- 2004 096 319
- US-A1- 2015 040 566

## Description

### BACKGROUND OF THE INVENTION

### Field of the Invention

Exemplary embodiments of the present invention relate to a sealing assembly for a turbine, and more particularly, to a sealing assembly for a turbine which is configured such that sealing between a rotating body and a fixed body of the turbine is embodied in a point contact manner, whereby a wear rate of the sealing structure can be reduced, and leakage of fluid can be effectively prevented.

### Description of the Related Art

Generally, a turbine is a power generating apparatus which converts thermal energy of fluid such as gas or steam into rotating force that is mechanical energy. The turbine includes a rotor provided with a plurality of rotating buckets such that the rotor is axially rotated by fluid, and a casing which encloses the circumference of the rotor and is provided with a plurality of fixed diaphragms.

In this regard, a gas turbine includes a compressor, a combustor and a turbine and is configured such that, when the compressor rotates, external air is drawn into and compressed in the compressor, the compressed air is transmitted to the combustor, and then combustion is implemented by mixing the compressed air with fuel in the combustor. High-temperature and high-pressure gas generated from the combustor passes through the turbine and rotates the rotor of the turbine, thus driving a generator.

In the case of a steam turbine, a high-pressure turbine, a middle-pressure turbine and a low-pressure turbine are coupled in series or parallel with each other so as to rotate a rotor. In the case where the steam turbine has a serial structure, the high-pressure turbine, the middle-pressure turbine and the low-pressure turbine share a single rotor.

Each turbine of the steam turbine includes fixed diaphragms and rotating buckets provided around the rotor in a casing. Steam rotates the rotor while passing through the fixed buckets and the rotating diaphragms, and thus drives a generator.

In each of the gas turbine and the steam turbine, the rotating body (the rotor) is rotated relative to the fixed body (fixed diaphragms). Therefore, leakage of high-temperature and high-pressure fluid is caused through space between the fixed body and the rotating body. Such fluid leakage is a factor of a reduction in energy efficiency due to power loss. Efforts to reduce the leakage of fluid through the space between the rotating body and the fixed body have continued.

To minimize leakage of fluid, space between the fixed body and the rotating body must be preferentially minimized, but there are limitations on reducing the space.

For example, if the space between the fixed body and the rotating body is excessively small, when the rotating body is axially rotated, the rotating body and the fixed body interfere with each other, thus causing vibrations due to rubbing. This may cause a serious damage to the turbine.

In the case of the steam turbine, because high-temperature steam drawn from a boiler applies heat to the rotating body and the fixed body, they are expanded or contracted by several millimeters to several tens of millimeters depending on positions when the steam turbine is operated and stopped. In this case, the rotating body and the fixed body differentially expand or contract because of different characteristics of the materials. Furthermore, depending on the structure of the turbine, the directions in which the rotating body and the fixed body expand or contract are different from each other. Thus, the rotating body and the fixed body may cause interference with each other during the operation, thus causing rubbing.

Recently, a sealing technology is used, in which a honeycomb seal and a labyrinth seal are used for sealing of the gas turbine or the steam turbine such that the fixed body and the rotating body make smooth contact with each other while reducing the space therebetween.

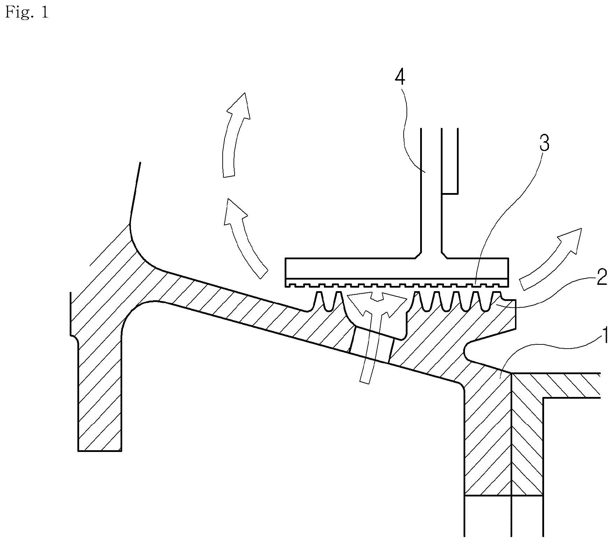

In a sealing method using the honeycomb seal and the labyrinth seal, as shown in FIG. 1, the honeycomb seal 3 is disposed on a fixed body 4 of a turbine, and the labyrinth seal 2 is disposed on a rotating body 1 of the turbine such that it faces the honeycomb seal 3 at a position adjacent thereto. To prevent leakage of fluid shown by the arrows, this structure is configured such that space between the honeycomb seal 3 and the labyrinth seal 2 is relatively small, and the number of teeth of the labyrinth seal 2 is relatively large.

If the distance between the honeycomb seal 3 and the labyrinth seal 2 is reduced to a degree to which they do not make contact with each other, the space through which fluid leaks is reduced, and if the number of teeth of the labyrinth seal 2 is increased, hydraulic pressure is reduced every time fluid passes over each tooth, whereby the flow of leakage fluid is slowed down. Thereby, leakage of fluid through the space between the rotating body 1 and the fixed body 4 of the turbine can be prevented or minimized.

However, in the conventional sealing method, even if the honeycomb seal 3 and the labyrinth seal 2 are formed such that the distance therebetween is constant, the distance may change due to vibrations or thermal expansion of the materials during the operation of the turbine, whereby a wear rate of the sealing structure increases because of rubbing. This may eventually cause damage to a blade or parts of the turbine. In addition, due to abrasion of the sealing structure, the sealing performance deteriorates, and fluid loss is caused, thus reducing the output efficiency of the turbine.

Korean Patent Registration No. 1507500 B1 (Application Date: Sept. 30, 2013) relates to a labyrinth seal and a reaction type steam turbine having the same. The labyrinth seal is assembled to a fixated body to support a rotor to rotate with the turbine shaft of a steam turbine in order to seal a radial gap between the rotor and the fixated body. The seal comprises a ring-shaped body, multiple tooth-shaped parts protruding from the inner circumference of the body, and a protrusion which is longer than the tooth-shaped parts, wider than the pitch of the tooth-shaped parts, and which protrudes from the inner circumference of the body.

DE 29 31 714 A1 describes a contactless labyrinth seal for rotary machines, particularly turbines, comprises several sealing strips and comb-pieces. Over the length of the seal in the rotor and stator are S-shaped sealing strips and comb-profile sections, these being so arranged that their sealing edges are inclined to each other. A radial gap is formed between their free ends, varying with the pressure difference of the flow between rotor and stator. The comb-profile section can be of spiral shape, while the strips fit in peripheral grooves in the stator.

US 2015/040566 A1 describes a helical seal system including a first component, and a second component rotatable relative to the first component. The second component extends from a high pressure portion to a low pressure portion through an intermediate portion. A helical seal is provided on the intermediate portion of the second component. The helical seal includes at least one thread component having a pitch that is configured and disposed to draw fluids from the low pressure portion toward the high pressure portion when the second component is rotated.

US 2004/096319 A1 describes a so-called comb-type labyrinth sealing device disposed in a gap between a rotor blade, i.e. a rotating member, and a labyrinth packing, i.e. a stationary member. The sealing device has a plurality of sealing fins arranged on the opposite sides of the gap opposite to each other. The sealing fins are axially spaced apart at unequal pitches, and hence a possibility that some of the clearances between the opposite sealing fins decrease when a casing holding the labyrinth packing and a rotor are axially displaced relative to each other due to the difference in thermal expansion between the rotator and the casing increases.

### SUMMARY OF THE INVENTION

An object of the present invention is to provide an apparatus which is configured such that sealing between a rotating body and a fixed body is embodied in a point contact manner, whereby a wear rate of the sealing structure can be reduced, and leakage of fluid can be effectively prevented.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

The object is solved by the features of the independent claims.

In accordance with one aspect of the present invention, a sealing assembly for a turbine is provided, including: a first sealing member disposed on an inner circumferential surface of a fixed body of the turbine; and a second sealing member disposed on an outer circumferential surface of a rotating body of the turbine at a position adjacent to the first sealing member, wherein the first sealing member includes a first tooth and the second sealing member includes a second tooth configured to cause fluid to flow in an axial direction of the turbine when the rotating body of the turbine rotates, and the flow of fluid offsets flow of fluid drawn into space between the fixed body and the rotating body of the turbine.

The second sealing member includes: a second sealing body mounted to the outer circumferential surface of the rotating body of the turbine; and the second tooth wound around the second sealing body a plurality of times and disposed in a spiral shape, the second tooth being provided to protrude toward the first sealing member.

The second tooth may have a spiral shape in a reverse direction of the flow of leakage fluid.

The second sealing member further includes a protrusion provided on the second sealing body and disposed to be interlocked with the second tooth so that fluid is pushed outward with respect to a direction of rotation of the second sealing member.

The protrusion may be disposed at a predetermined angle to the second tooth.

The height of the protrusion may be less than that of the tooth.

The protrusion may comprise a plurality of protrusions, wherein the protrusions may be disposed on a same line between parts of the second tooth.

The protrusion may comprise a plurality of protrusions, wherein the protrusions may be provided between parts of the second tooth and disposed on different lines spaced apart from each other at regular distances.

The first sealing member may include: a first sealing body mounted to the fixed body of the turbine; and the first tooth disposed on the first sealing body and provided to protrude toward the second sealing member.

The first tooth and the second tooth may be configured such that when the second tooth rotates, the first and second teeth come into point contact with each other and prevent leakage of fluid.

The first tooth may also have a spiral shape in a reverse direction of the flow of leakage fluid. That is, both the first and second teeth may have spiral shapes in the reverse direction of the flow of leakage fluid, or either the first or second tooth may have a spiral shape.

The first tooth may comprise a plurality of first teeth, wherein at least some of the first teeth may be disposed on the first sealing body at positions spaced apart from each other at different distances.

The plurality of first teeth may be formed on the first sealing body such that the distances therebetween are reduced from a leakage-fluid inlet region to a leakage-fluid outlet region.

Each of the first and second sealing members may comprise a labyrinth seal.

The first tooth and the second tooth may partially come into contact with each other.

In accordance with another aspect of the present invention, a turbine comprising the sealing assembly having the above-mentioned configuration is provided.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating a sealing structure of a conventional turbine;
FIG. 2 is a partial perspective view illustrating a sealing assembly for a turbine according to the present disclosure, which is included for illustrative purposes;
FIG. 3 is partial side view showing a fixed-body sealing structure shown in FIG. 2;
FIG.4 is a partial side view of FIG. 2;
FIG. 5 is a view illustrating a point contact state between sealing parts of a fixed body and a rotating body shown in FIG. 2;
FIG. 6a is a partial perspective view illustrating an embodiment of the sealing assembly for the turbine according to the present invention;
FIG. 6b is a partial side view of the present invention shown in FIG. 6a and;
FIG. 7 is a partial perspective view illustrating another embodiment of the sealing assembly for the turbine according to the present invention.

### DESCRIPTION OF SPECIFIC EMBODIMENTS

Hereinafter, embodiments of a sealing assembly for a turbine according to the present invention will be described with reference to the attached drawings.

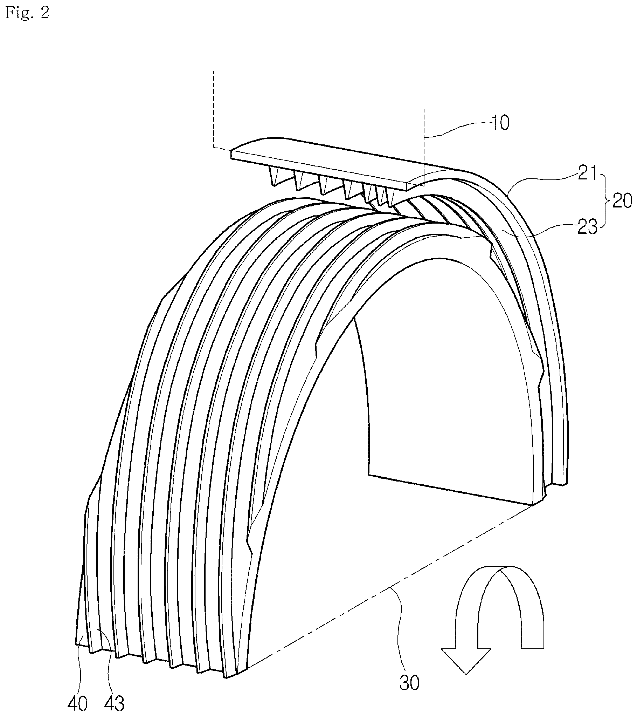

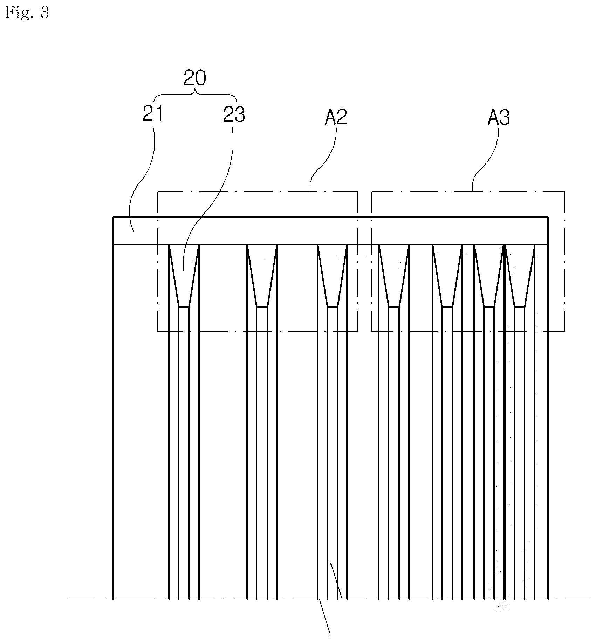

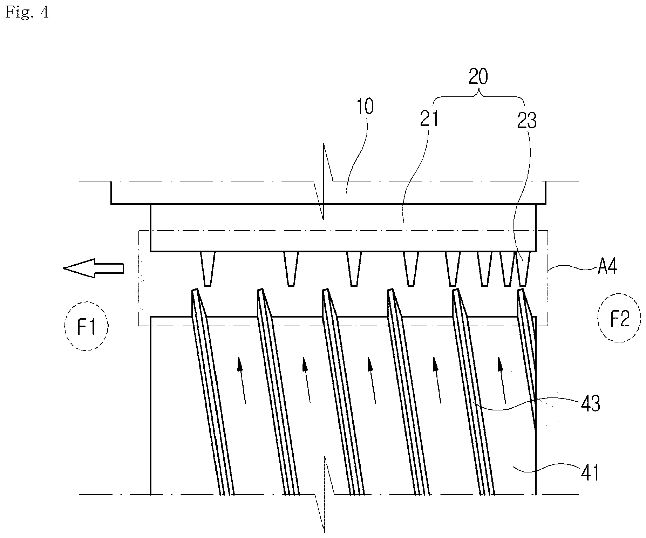

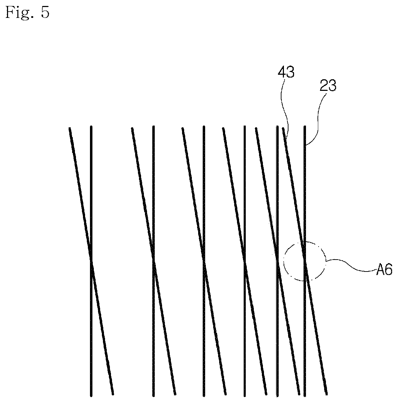

FIG. 2 is a partial perspective view illustrating a sealing assembly for a turbine according to the present disclosure, which is include for illustrative purposes. FIG. 3 is partial side view showing a fixed-body sealing structure shown in FIG. 2. FIG.4 is a partial side view of FIG. 2. FIG. 5 is a view illustrating a point contact state between sealing parts of a fixed body and a rotating body shown in FIG. 2.

Referring to FIGS. 2 to 5, the sealing assembly for the turbine may include a first sealing member 20 and a second sealing member 40.

The first sealing member 20 may be disposed in a circumferential direction on an inner circumferential surface of the fixed body 10 of the turbine and have a ring shape. The fixed body 10 of the turbine may be a concept including a fixed diaphragm and a casing of the turbine to which the fixed diaphragm is mounted. The first sealing member 20 may be formed of a labyrinth seal provided with a plurality of protrusions.

In detail, the first sealing member 20 may include a first sealing body 21 and a first tooth 23. The first sealing body 21 may be installed in the circumferential direction on the inner circumferential surface of the fixed body 10 of the turbine. The first tooth 23 may be formed on the first sealing body 21 and provided to protrude toward the second sealing member 40.

In this regard, the first tooth 23 may comprise a plurality of first teeth 23. At least some of the first teeth 23 may be disposed on the first sealing body 21 at positions spaced apart from each other at different distances. Referring to FIG. 3, it is shown that the first teeth 23 are formed on the first sealing body 21 such that the distance between the first teeth 23 is reduced from a leakage-fluid inlet region F1 to a leakage-fluid outlet region F2.

As the distance between the first teeth 23 is reduced from the leakage-fluid inlet region F1 to the leakage-fluid outlet region F2 and, in addition, the first teeth 23 are interlocked with the second sealing member (40; in detail, a second tooth which will be described later herein) in a point contact manner, leakage of fluid that flows through space between the first sealing member 20 and the second sealing member 40 can be further limited.

Compared to the case where the first teeth 23 are disposed on the first sealing body 21 at regular distances larger than that of the present disclosure, the structure of the present disclosure can more effectively prevent leakage of fluid around the leakage-fluid outlet region F2.

Furthermore, compared to the case where the first teeth 23 are disposed at regular distances smaller than that of the present disclosure, the structure of the present disclosure can reduce a wear rate between the first teeth 23 and the second sealing member 40. In other words, if all of the first teeth 23 are disposed close to each other, the fluid leakage prevention effect is enhanced, but a wear rate of the sealing structure is markedly increased because the point contact region is increased.

Therefore, to maximize the sealing effect while maintaining the wear rate of the sealing structure in an appropriate level, it is preferable that, around the leakage-fluid inlet region F1, the first teeth 23 be disposed on the first sealing body 21 at positions spaced apart from each other by comparatively large distances (refer to region A2 of FIG. 3), and, around the leakage-fluid outlet region F2, the first teeth 23 be disposed on the first sealing body 21 at positions spaced apart from each other by comparatively small distances (refer to region A3 of FIG. 3).

The second sealing member 40 may face the first sealing member 20 and be provided in the circumferential direction on the outer circumferential surface of the rotating body 30 of the turbine. The second sealing member 40 may have a ring shape. In this regard, the rotating body 30 of the turbine may be a concept including rotating buckets and a rotor to which the rotating buckets are mounted. The second sealing member 40 may be formed of a labyrinth seal.

In the case where each of the first sealing member 20 and the second sealing member 40 are embodied by the labyrinth seal, basically, leaking fluid is reduced in hydraulic pressure each time it passes through each of a plurality of protrusions of the labyrinth seal. Consequently, the flow rate of fluid is reduced from the leakage-fluid inlet region F1 to the leakage-fluid outlet region F2, whereby leakage of fluid can be blocked or minimized.

Furthermore, the second sealing member 40 may include a second sealing body 41 and a second tooth 43. The second sealing body 41 may be installed in the circumferential direction on the outer circumferential surface of the rotating body 30 of the turbine. The second tooth 43 may be provided to protrude from the second sealing body 41.

At least some of the second tooth 43 may be formed in a spiral shape in a direction opposite to the direction in which leakage fluid flows. Referring to FIGS. 2 and 4, there is illustrated the shape of the spiral second tooth 43 disposed on the second sealing body 41.

Referring to FIG. 5, there is illustrated a point contact state (A6) between each first tooth 23 and the second tooth 43. In detail, the first tooth 23 is circumferentially disposed in an annular shape on the first sealing body 21 and the second tooth 43 is disposed in a spiral shape on the second sealing body 41. Therefore, when the rotor rotates, the first tooth 23 and the second tooth 43 continuously make point contact (A6) with each other while rotating, thus limiting the space through which fluid leaks.

Furthermore, it is shown that the distance between the point contact portions A6 is reduced from the leakage-fluid inlet region F1 to the leakage-fluid outlet region F2 in the space between the first sealing member 20 and the second sealing member 40. Consequently, the possibility of leakage of fluid is further reduced.

Furthermore, because the second tooth 43 has a spiral shape, leakage fluid can return to the leakage-fluid inlet region F1. In more detail, when the rotor is operated, the rotating body 30 of the turbine is integrally rotated, and the second sealing member 40 mounted to the rotating body 30 of the turbine is also rotated along with the rotating body 30.

Then, while the second tooth 43 rotates, fluid that leaks through space between the first teeth 23 and the second tooth 43 is moved again in a reverse direction of the leakage flow direction. That is, leaked fluid flows in the circumferential direction along the spiral second tooth 43 and returns to the leakage-fluid inlet region F1, whereby leakage of fluid is more reliably blocked.

As shown in FIGS. 2 and 4, the second tooth 43 is integrally wound several times around the second sealing body 41. Therefore, when the second tooth 43 is rotated by the rotation of the rotor, leakage fluid can effectively return to the leakage-fluid inlet region F1 rather than remain in a space between the first sealing member 20 and the second sealing member 40.

As such, the wear rate of the sealing structure is minimized by the point contact structure between the first tooth 23 and the second tooth 43 and, simultaneously, leakage of fluid can be prevented. In addition, because of the rotation of the second tooth 43 having a spiral shape, leakage fluid is moved in a reverse direction of the leakage flow direction, whereby fluid can be more reliably prevented from remaining or leaking.

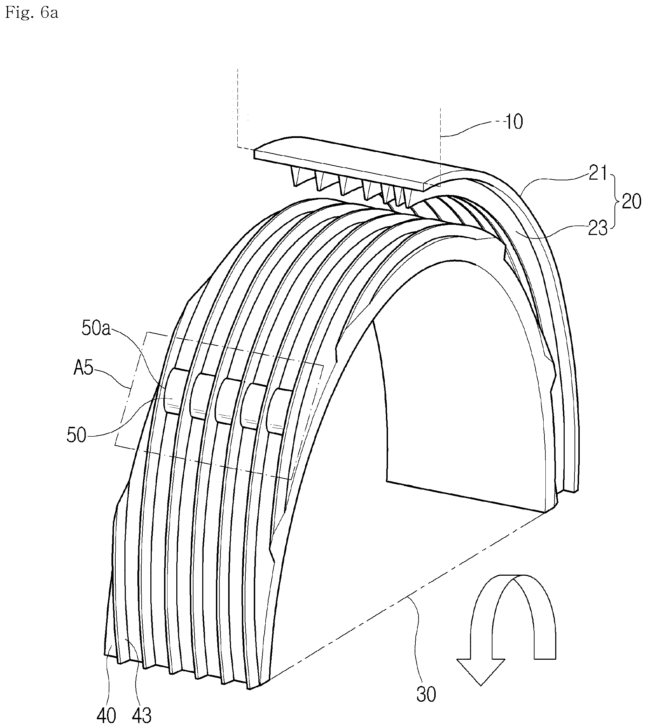

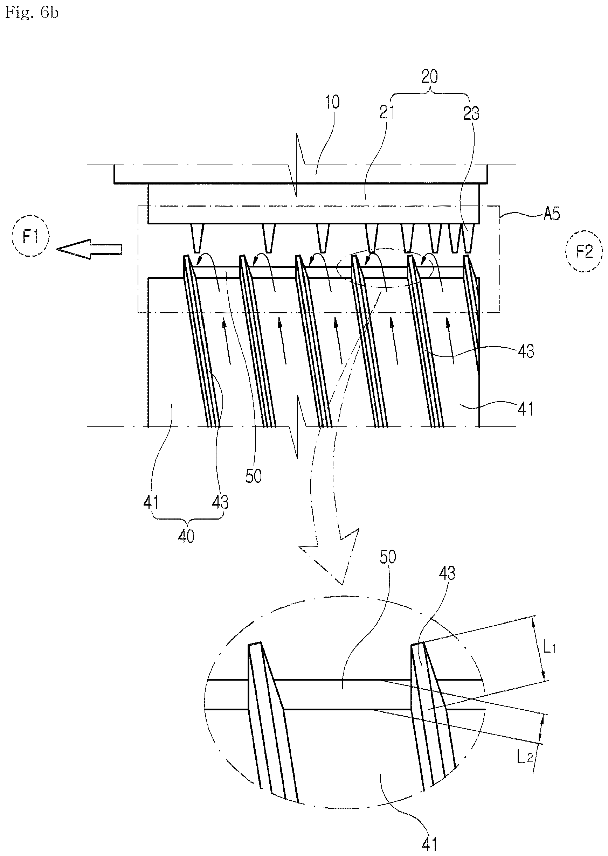

FIG. 6a is a partial perspective view illustrating an embodiment of the sealing assembly for the turbine according to the present invention. FIG.6b is a partial side view of the present invention shown in FIG. 6a.

Referring to FIGS. 6a and 6b, the sealing assembly for the turbine according to the embodiment of the present invention may include a first sealing member 20 and a second sealing member 40. The descriptions of the disposition, shape and material of the first and second sealing members 20 and 40 are the same as those of FIGS. 1 to 5; therefore, further description will be omitted.

Hereinbelow, the configuration of the second sealing member 40 will be described in detail. The second sealing member 40 may include a second sealing body 41 and a second tooth 43. The second sealing body 41 may be installed in the circumferential direction on the outer circumferential surface of the rotating body 30 of the turbine. The second tooth 43 may be provided to protrude from the second sealing body 41.

At least some of the second tooth 43 may be formed in a spiral shape in a direction opposite to the direction in which leakage fluid flows. Referring again to FIGS. 6a and 6b, there is illustrated the shape of the spiral second tooth 43 disposed on the second sealing body 41. However, the function of the spiral structure of the second tooth 43 is the same as that of FIGS. 1 to 5; therefore, detailed description thereof will be omitted.

In the embodiment of the present invention, the second sealing member 40 further includes a protrusion 50. The protrusion 50 may be disposed to be interlocked with the second tooth 43 on the second sealing body 41 such that fluid is pushed outward with respect to the direction of the rotation of the second sealing body 41.

In detail, as shown in FIG. 6a, a single or a plurality of protrusions 50 may be disposed at a predetermined angle between parts of the second tooth 43. In the embodiment of the present invention, the protrusions 50 are disposed on the same line perpendicular to the second tooth 43.

Referring to FIG. 6b, when the rotating body 30 of the turbine rotates, the protrusions 50 are rotated along with the rotating body 30, and fluid that flows between the parts of the second tooth 43 is pushed outward while passing over the protrusion 50. In this case, because fluid is pushed toward the first sealing member 20, a fluid barrier (refer to a region A5 of FIG. 6b) may be formed. The fluid barrier impedes the flow of fluid passing through space between the first sealing member 20 and the second sealing member 40 and, ultimately, functions to prevent leakage of fluid.

In this regard, it is preferable that a height L2 of the protrusion 50 be less than a height L1 of the second tooth 43.

If the height of the protrusion 50 is equal to or greater than the height of the second tooth 43, the protrusion 50 impedes the flow of fluid that flows between the parts of the second tooth 43, thus making it difficult to move leakage fluid toward the leakage-fluid inlet region.

In the case where the height of the protrusion 50 is lower than the height of the second tooth 43, the fluid barrier can be formed without impeding the flow of fluid. Therefore, the characteristics of the protrusion 50 can be more clearly derived. In more detail, it is preferable that the height of the protrusion 50 be half of the height of the second tooth 43 or less.

Furthermore, the protrusion 50 may have a curved inclined part 50a on at least one side surface thereof so that fluid can be smoothly pushed outward in the direction of the rotation. In this case, because fluid is smoothly pushed outward along the curved inclined surface 50a, the fluid barrier (refer to the region A5 of FIG. 6b) can be reliably formed without causing a vortex phenomenon.

As such, the embodiment of the present invention forms the fluid barrier using the protrusion 50 as well as having the effect introduced by the disclosure of FIGS. 1 to 5, thus more reliably blocking leakage of fluid.

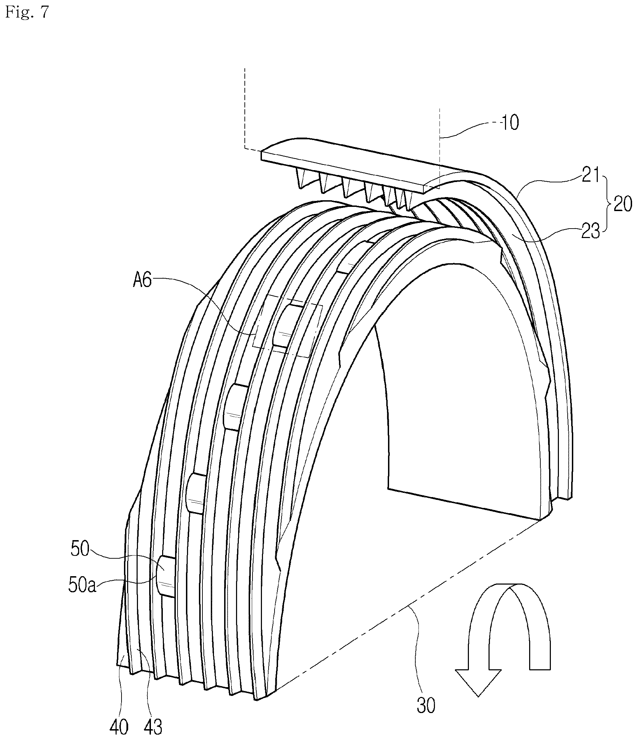

FIG. 7 is a partial perspective view illustrating another embodiment of the sealing assembly for the turbine according to the present invention.

Referring to FIG. 7, the sealing assembly for the turbine according to the other embodiment of the present invention may include a first sealing member 20 and a second sealing member 40. The descriptions of the disposition, shape and material of the first and second sealing members 20 and 40 are the same as those of FIGs. 1 to 5; therefore, further description will be omitted.

Hereinbelow, the configuration of the second sealing member 40 will be described in detail. The second sealing member 40 may include a second sealing body 41 and a second tooth 43. The second sealing body 41 may be installed in the circumferential direction on the outer circumferential surface of the rotating body 30 of the turbine. The second tooth 43 may be provided to protrude from the second sealing body 41.

At least some of the second tooth 43 may be formed in a spiral shape in a direction opposite to the direction in which leakage fluid flows. Referring again to FIG. 7, there is illustrated the shape of the spiral second tooth 43 disposed on the second sealing body 41. However, the function of the spiral structure of the second tooth 43 is the same as that of FIGs. 1 to 5; therefore, detailed description thereof will be omitted.

In the other embodiment of the present invention, the second sealing member 40 further includes a protrusion 50. The protrusion 50 may be disposed to be interlocked with the second tooth 43 on the second sealing body 41 such that fluid is pushed in the direction of the rotation of the second sealing body 41.

In detail, as shown in FIG. 7, a single or a plurality of protrusions 50 may be disposed at a predetermined angle between parts of the second tooth 43. In the other embodiment of the present invention, unlike the embodiment of FIGs. 6a and b, the protrusions 50 may be disposed between the parts of the second tooth 43 on different lines spaced apart from each other at regular distances.

The descriptions related to the height of the protrusion 50 and the curved inclined surface 50a are the same as those of the embodiment of FIGs. 6a and b; therefore, further description will be omitted.

Referring to FIG. 7, when the rotating body 30 of the turbine rotates, the protrusions 50 are rotated along with the rotating body 30, and fluid that flows between the parts of the second tooth 43 is pushed outward while passing over the protrusion 50. In this case, because fluid is pushed toward the first sealing member 20, it can form a fluid barrier. The fluid barrier impedes the flow of fluid passing through space between the first sealing member 20 and the second sealing member 40 and, ultimately, functions to prevent leakage of fluid.

In this regard, the protrusions 50 are disposed between the parts of the second tooth 43 at positions spaced apart from each other at regular distances. Thus, when the rotating body 30 of the turbine rotates, reinforced fluid barriers are formed in stages with time intervals in the space between the first sealing member 20 and the second sealing member 40 so as to prevent leakage of fluid.

As such, the other embodiment of the present invention forms the fluid barriers using the protrusion 50 in stages with regular time intervals as well as having the effect introduced by FIGs. 1 to 5, thus more reliably blocking leakage of fluid.

According to the present invention, sealing for preventing leakage of fluid between a rotating body and a fixed body is realized in a point contact manner, so a rubbing phenomenon of the sealing structure is mitigated, whereby a wear rate of the sealing structure can be reduced.

Furthermore, because a sealing part of the rotating body and a sealing part of the fixed body makes contact with each other, space through which fluid flows is blocked. Therefore, leakage of fluid between the rotating body and the fixed body can be effectively prevented.

In addition, the sealing part of the fixed body is configured such that the structure thereof becomes dense from a leakage-fluid inlet region to a leakage-fluid outlet region so that the point contact distances with the rotating body are reduced. Thereby, leakage of fluid can be more reliably blocked.

Moreover, the sealing part of the rotating body has a spiral shape in a reverse direction of the fluid leakage direction so as to return leaked fluid to the fluid inlet region, thus additionally preventing leakage of fluid.

Ultimately, this structure can minimize the output loss of the turbine resulting from leakage of fluid and thus enhance the efficiency of the turbine. As well, the contact area between the sealing part of the rotating body and the sealing part of the fixed part is reduced so that the lifetime and replacement period of the sealing parts can be extended, whereby the maintenance costs of the turbine can be reduced.

While the sealing assembly for the turbine according to the present invention has been described with respect to the specific embodiments, it will be apparent to those skilled in the art that various changes and modifications may be made without departing from the scope of the invention as defined in the following claims.

## Claims

1. A sealing assembly for a turbine, comprising:
a first sealing member (20) disposed on an inner circumferential surface of a fixed body (10) of the turbine; and
a second sealing member (40) disposed on an outer circumferential surface of a rotating body (30) of the turbine at a position adjacent to the first sealing member (20),
wherein the first sealing member (20) includes a first tooth (23) and the second sealing member (40) includes a second tooth (43) configured to cause fluid to flow in an axial direction of the turbine when the rotating body (30) of the turbine rotates,
wherein the second sealing member (40) comprises:
a second sealing body (41) mounted to the outer circumferential surface of the rotating body (40) of the turbine; and
the second tooth (43) wound around the second sealing body (41) a plurality of times and disposed in a spiral shape, the second tooth (43) being provided to protrude toward the first sealing member (20),
**characterized in that** the second sealing member (40) further comprises a protrusion (50) provided on the second sealing body (41) and disposed to be interlocked with the second tooth (43) so that fluid is pushed outward with respect to a direction of rotation of the second sealing member (40).

2. The sealing assembly according to claim 1, wherein the protrusion (50) is disposed at a predetermined angle to the second tooth (43).

3. The sealing assembly according to claim 1 or 2, wherein a height of the protrusion (50) is less than a height of the tooth (43).

4. The sealing assembly according to any one of claims 1 to 3, wherein the protrusion (50) comprises a plurality of protrusions, wherein the protrusions (50) are disposed on a same line between parts of the second tooth (43).

5. The sealing assembly according to any one of the preceding claims 1 to 3, wherein the protrusion (50) comprises a plurality of protrusions, wherein the protrusions (50) are provided between parts of the second tooth (43) and disposed on different lines spaced apart from each other at regular distances.

6. The sealing assembly according to any one of the preceding claims 1 to 5, wherein the first sealing member (20) comprises:
a first sealing body (21) mounted to the fixed body (10) of the turbine; and
the first tooth (23) disposed on the first sealing body (21) and provided to protrude toward the second sealing member (40).

7. The sealing assembly of claim 6, wherein the first tooth (23) comprises a plurality of first teeth, wherein at least some of the first teeth are disposed on the first sealing body (21) at positions spaced apart from each other at different distances.

8. The sealing assembly of claim 7, wherein the plurality of first teeth (23) are formed on the first sealing body (21) such that the distances therebetween are reduced from a leakage-fluid inlet region to a leakage-fluid outlet region.

9. The sealing assembly according to any one of the preceding claims, wherein each of the first and second sealing members (20, 40) comprises a labyrinth seal.

10. A turbine comprising the sealing assembly according to any one of claims 1 to 9.

## Patentansprüche

1. Dichtungsanordnung für eine Turbine, die Folgendes umfasst:
ein erstes Dichtungselement (20), das an einer Innenumfangsfläche eines festen Körpers (10) der Turbine angeordnet ist; und
ein zweites Dichtungselement (40), das an einer Außenumfangsfläche eines Drehkörpers (30) der Turbine an einer Position, die an das erste Dichtungselement (20) angrenzt, angeordnet ist, wobei
das erste Dichtungselement (20) einen ersten Zahn (23) enthält und das zweite Dichtungselement (40) einen zweiten Zahn (43) enthält, die konfiguriert sind, zu bewirken, dass ein Fluid in einer Axialrichtung der Turbine fließt, wenn sich der Drehkörper (30) der Turbine dreht, und
das zweite Dichtungselement (40) Folgendes umfasst:
einen zweiten Dichtungskörper (41), der an der Außenumfangsfläche des Drehkörpers (40) der Turbine montiert ist; und
den zweiten Zahn (43), der mehrmals um den zweiten Dichtungskörper (41) gewickelt ist und in einer Spiralform angeordnet ist, wobei der zweite Zahn (43) derart vorgesehen ist, dass er zu dem ersten Dichtungselement (20) vorsteht,
**dadurch gekennzeichnet, dass** das zweite Dichtungselement (40) ferner einen Vorsprung (50) umfasst, der am zweiten Dichtungskörper (41) vorgesehen ist und derart angeordnet ist, dass er mit dem zweiten Zahn (43) verzahnt ist, so dass ein Fluid in Bezug auf eine Drehrichtung des zweiten Dichtungselements (40) nach außen gedrückt wird.

2. Dichtungsanordnung nach Anspruch 1, wobei der Vorsprung (50) in einem vorgegebenen Winkel zum zweiten Zahn (43) angeordnet ist.

3. Dichtungsanordnung nach Anspruch 1 oder 2, wobei eine Höhe des Vorsprungs (50) kleiner als eine Höhe des Zahns (43) ist.

4. Dichtungsanordnung nach einem der Ansprüche 1 bis 3, wobei der Vorsprung (50) mehrere Vorsprünge umfasst und die Vorsprünge (50) auf derselben Linie zwischen Teilen des zweiten Zahns (43) angeordnet sind.

5. Dichtungsanordnung nach einem der vorhergehenden Ansprüche 1 bis 3, wobei der Vorsprung (50) mehrere Vorsprünge umfasst und die Vorsprünge (50) zwischen Teilen des zweiten Zahns (43) vorgesehen sind und auf verschiedenen Linien, die in regelmäßigen Abständen voneinander beabstandet sind, angeordnet sind.

6. Dichtungsanordnung nach einem der vorhergehenden Ansprüche 1 bis 5, wobei das erste Dichtungselement (20) Folgendes umfasst:
einen ersten Dichtungskörper (21), der am festen Körper (10) der Turbine montiert ist; und
den ersten Zahn (23), der am ersten Dichtungskörper (21) angeordnet ist und derart vorgesehen ist, dass er zum zweiten Dichtungselement (40) vorsteht.

7. Dichtungsanordnung nach Anspruch 6, wobei der erste Zahn (23) mehrere erste Zähne umfasst, wobei mindestens einige der ersten Zähne am ersten Dichtungskörper (21) an Positionen, die in verschiedenen Abständen voneinander beabstandet sind, angeordnet sind.

8. Dichtungsanordnung nach Anspruch 7, wobei die mehreren ersten Zähne (23) derart am ersten Dichtungskörper (21) gebildet sind, dass die Abstände dazwischen von einem Leckfluideinlassbereich zu einem Leckfluidauslassbereich verringert werden.

9. Dichtungsanordnung nach einem der vorhergehenden Ansprüche, wobei sowohl das erste als auch das zweite Dichtungselement (20, 40) eine Labyrinthdichtung umfasst.

10. Turbine, die die Dichtungsanordnung nach einem der Ansprüche 1 bis 9 umfasst.

## Revendications

1. Ensemble d'étanchéité pour une turbine, comprenant
un premier membre d'étanchéité (20) disposé sur une surface circonférentielle intérieure d'un corps fixe (10) de la turbine ; et
un second membre d'étanchéité (40) disposé sur une surface circonférentielle extérieure d'un corps rotatif (30) de la turbine à une position adjacente au premier membre d'étanchéité (20),
dans lequel le premier membre d'étanchéité (20) inclut une première dent (23) et le second membre d'étanchéité (40) inclut une seconde dent (43) configurée pour faire circuler le fluide dans une direction axiale de la turbine lorsque le corps rotatif (30) de la turbine tourne,
dans lequel le second membre d'étanchéité (40) comprend :
un second corps d'étanchéité (41) monté sur la surface circonférentielle extérieure du corps rotatif (40) de la turbine ; et
la seconde dent (43) enroulée autour du second corps d'étanchéité (41) une pluralité de fois et disposée dans une forme en spirale, la seconde dent (43) étant prévue pour faire saillie en direction du premier membre d'étanchéité (20),
**caractérisé en ce que** le second membre d'étanchéité (40) comprend en outre une saillie (50) prévue sur le second corps d'étanchéité (41) et disposée pour être inter-verrouillée avec la seconde dent (43) de façon à ce que le fluide soit poussé vers l'extérieur par rapport à une direction de rotation du second membre d'étanchéité (40).

2. Ensemble d'étanchéité selon la revendication 1, dans lequel la saillie (50) est disposée à un angle prédéterminé par rapport à la seconde dent (43).

3. Ensemble d'étanchéité selon la revendication 1 ou 2, dans lequel une hauteur de la saillie (50) est inférieure à une hauteur de la dent (43).

4. Ensemble d'étanchéité selon l'une quelconque des revendications 1 à 3, dans lequel la saillie (50) comprend une pluralité de saillies, dans lequel les saillies (50) sont disposées sur une même ligne entre des parties de la seconde dent (43).

5. Ensemble d'étanchéité selon l'une quelconque des revendications 1 à 3, dans lequel la saillie (50) comprend une pluralité de saillies, dans lequel les saillies (50) sont prévues entre des parties de la seconde dent (43) et disposées sur différentes lignes espacées l'une de l'autre à distances régulières.

6. Ensemble d'étanchéité selon l'une quelconque des revendications 1 à 5, dans lequel le premier membre d'étanchéité (20) comprend :
un premier corps d'étanchéité (21) monté sur le corps fixe (10) de la turbine ; et
la première dent (23) disposée sur le premier corps d'étanchéité (21) et prévue pour faire saillie en direction du second membre d'étanchéité (40).

7. Ensemble d'étanchéité selon la revendication 6, dans lequel la première dent (23) comprend une pluralité de premières dents, dans lequel au moins une partie des premières dents est disposée sur le premier corps d'étanchéité (21) à des positions espacées l'une de l'autre à différentes distances.

8. Ensemble d'étanchéité selon la revendication 7, dans lequel la pluralité de premières dents (23) sont formées sur le premier corps d'étanchéité (21) de telle façon que les distances entre elles soient réduites d'une région d'entrée de fluide de fuite à une région de sortie de fluide de fuite.

9. Ensemble d'étanchéité selon l'une quelconque des revendications précédentes, dans lequel chacun des premier et second membres d'étanchéité (20, 40) comprend un joint labyrinthe.

10. Turbine comprenant l'ensemble d'étanchéité selon l'une quelconque des revendications 1 à 9.
